Europäisches Patentamt

European Patent Office

Office européen des brevets

(11) Publication number: **0 053 463**
**B1**

# EUROPEAN PATENT SPECIFICATION

(45) Date of publication of patent specification: **16.06.87**

(21) Application number: **81305506.8**

(22) Date of filing: **23.11.81**

(51) Int. Cl.⁴: **G 02 B 7/18**

(54) **Optical apparatus having a mirror and a mirror mounting stage.**

(30) Priority: **28.11.80 JP 167511/80**

(43) Date of publication of application:
**09.06.82 Bulletin 82/23**

(45) Publication of the grant of the patent:
**16.06.87 Bulletin 87/25**

(84) Designated Contracting States:
**DE FR GB**

(56) References cited:
**DE-U-1 708 630**
**DE-U-1 776 217**
**US-A-4 157 861**

(73) Proprietor: **FUJITSU LIMITED**
**1015, Kamikodanaka Nakahara-ku**
**Kawasaki-shi Kanagawa 211 (JP)**

(72) Inventor: **Watanabe, Yoshio**
**466-18, Eda-cho Midori-ku**
**Yokohama-shi Kanagawa 227 (JP)**
Inventor: **Iijima, Nobuo**
**3016-1-416, Nagatsuda-cho Midori-ku**
**Yokohama-shi Kanagawa 227 (JP)**

(74) Representative: **Sunderland, James Harry et al**
**HASELTINE LAKE & CO Hazlitt House 28**
**Southampton Buildings Chancery Lane**
**London WC2A 1AT (GB)**

Courier Press, Leamington Spa, England.

## Description

The present invention relates to optical apparatus having a mirror and a mirror mounting stage.

For example, in an electron beam exposure system, the wafer which is to be irradiated by an electron beam is mounted on a stage which can move in two orthogonal (e.g. vertical and horizontal) directions in a plane so that the electron beam can irradiate desired regions of the wafer.

With regard to the stage, it is essential to detect its position with high accuracy in order that the electron beam accurately irradiates the wafer. A laser interferometer is used for accurately detecting the position of the stage.

A laser interferometer uses a laser generator and a half mirror etc. The location of the stage can be detected by counting interference fringes generated between the laser beam as emitted from the laser generator and the laser beam as emitted from the laser generator and then reflected at the stage. For the purpose of detecting accurately the location of the stage using such a laser interferometer the stage is provided with a mirror which reflects the laser beam.

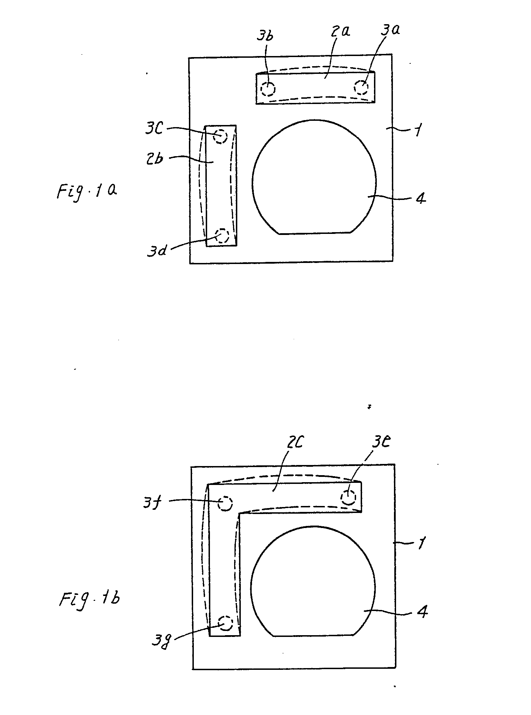

Previously proposed methods of mounting a mirror on a stage will now be explained with reference to Figures 1a and 1b of the accompanying drawings, which are respective plan views.

On a stage 1, consisting of a lightweight metal or metal alloy, for example aluminium alloy or magnesium alloy, a wafer 4 which is to be irradiated by an electron beam is mounted. In Figure 1a, a pair of mirrors 2a, 2b arranged in mutually orthogonal, crossing, directions are fixed to the stage 1 at their end portions 3a, 3b, 3c, 3d. The mirror end portions may be screwed to the stage or bonded thereto by a bonding agent. In Figure 1b an L-shaped mirror 2C is used. The mirror 2C is fixed to the stage at its end portions 3e, 3g and its vertex or angle portion 3f. Screw fixing or bonding by a bonding agent may be employed for fixing the relevant mirror portions to the stage.

The stage 1 is usually composed of a material such as aluminium alloy as explained above, whilst the mirror or mirrors, on the other hand, are usually composed of a material such as quartz glass.

The linear expansion coefficients of the stage and the mirror or mirrors thus differ greatly: quartz glass has a linear expansion coefficient of $7 \times 10^{-7}/^{\circ}C$, whilst aluminium has a linear expansion coefficient of $23.9 \times 10^{-6}/^{\circ}C$.

If temperature changes whilst a wafer is being irradiated by the electron beam, the points at which the mirror or mirrors are affixed to the stage will follow expansion and/or contraction of the stage, resulting in mirror deformation for example as indicated by broken lines in Figures 1a and 1b. Thereby, the angle at which the directions of the mirrors cross, or at which different arms of the L-shape mirror 2C cross, which should naturally be 90°, deviates from that value.

Under these conditions, when a wafer is irradiated with an electron beam to form a pattern thereon, the pattern formed is deformed in vertical and horizontal directions because the positioning of the electron beam is carried out with reference to the laser beam reflecting surfaces provided by the mirror or mirrors.

With regard to Figure 1b it may be possible to employ a structure in which only the vertex or angled portion 3f of the L-shaped mirror is fixed to the stage, whilst the mirror end portions 3e, 3g are left free in order to prevent distortion of the mirror. However, in such a structure in which the mirror is fixed only at a single point, vibration of the free end portions of the L-shaped mirror, centering around the point of fixing to the stage, occurs and as a result accurate measurement is impossible.

DE—U—1 708 630 and DE—U—1776 217 disclose mounting arrangements for mirrors.

According to the present invention there is provided optical apparatus having a mirror and a mirror mounting stage, comprising;

a supporting portion, provided on the stage, to which a part of the mirror is affixed, the mirror also having a free part, unaffixed to that portion, and

buffer means, comprising a mounting portion affixed to the mirror mounting stage and a spring portion attached to the mounting portion and contacting the free part of the mirror, operable to take up relative displacements between the free part of the mirror and the mirror mounting stage.

An embodiment of the present invention can provide optical apparatus in which a mirror or mirrors are mounted on a stage having a linear expansion coefficient different from that of the mirror or mirrors which does not allow deformation of the mirror or mirrors when the apparatus is subjected to temperature changes.

An embodiment of the present invention can provide optical apparatus which does not allow any substantial change of angle between a pair of mirror surfaces when the apparatus is subjected to temperature changes.

An embodiment of the present invention can provide optical apparatus having a simple structure.

Reference is made, by way of example, to the accompanying drawings, in which:

Figures 1a and 1b are plan views of respective previously proposed mirror and mirror mounting stage arrangements for use in electron beam exposure systems.

Figures 2a, 2b and 2c are respective perspective views for assistance in explanation of the structure of optical apparatus embodying the present invention,

Figure 3 is a side view, to an enlarged scale, of a part of the optical apparatus of Figure 2c,

Figure 4a is a graph illustrating the relationship between temperature and deviation of an angle, nominally 90°, between two mirror surfaces for an embodiment of the present invention,

Figure 4b, is a graph illustrating the relationship between temperature and deviation of an angle, nominally 90°, between two mirror surfaces for previously proposed optical apparatus, and

Figure 5 is a perspective view of another embodiment of the present invention.

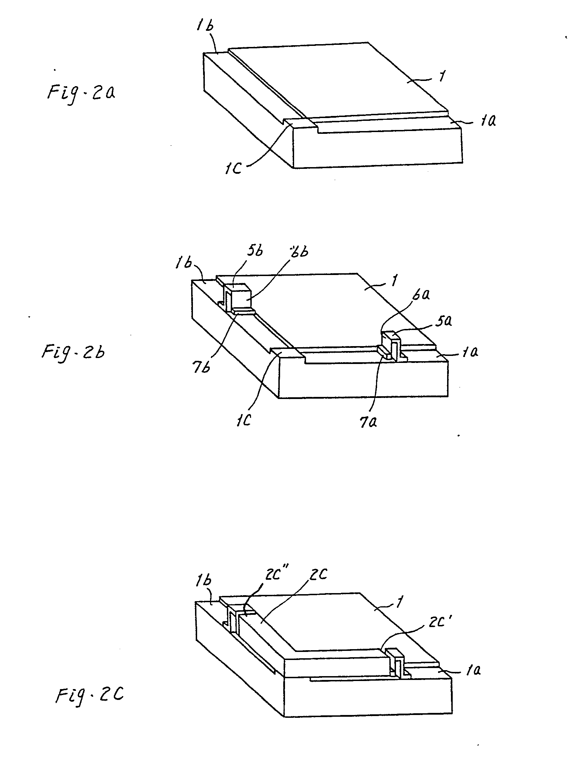

Figures 2a, 2b, 2c illustrate the structure after different stages in the assembly of the apparatus, with Figure 2c showing a completed optical apparatus embodying the present invention.

As shown in Figure 2a, step (stepped-down) portions 1a, 1b are provided along two adjacent sides (orthogonally crossing sides) on the upper surface of a stage 1, made of aluminium for example. At the angle or corner at the intersection of those two sides a supporting portion 1C (a plateau raised above the stepped-down portions) is provided.

On the step portions 1a, 1b of stage 1, mounting parts 5a, 5b are fixed by screwing or by bonding with a bonding agent, as shown in Figure 2b.

To upper front portions of the mounting parts 5a, 5b, flat plates 6a, 6b are attached. These flat plates 6a, 6b function as plate springs, and thus provide for a buffering action as will be understood from the following description.

At lower front parts of the flat plates 6a, 6b, rectangular parallelopiped spacers 7a, 7b are provided.

An L-shaped mirror 2C is fixed to the supporting portion 1C of the stage 1 at its vertex or angle part, by screw fixing or by bonding with a bonding agent, whilst end surfaces 2C', 2C" of the mirror 2C are fixed to the spacers 7a, 7b by a bonding agent.

It is preferred that the end surfaces 2C', 2C" and the spacers 7a, 7b be mechanically connected in this way, but it is possible for forego this mechanical connection and to rely only upon contact between the end surfaces 2C' and 2C" and the spacers 7a and 7b through an extremely large friction resistance.

The mounting parts 5a, 5b; flat plates 6a, 6b; and spacers 7a, 7b are all made of phosphor bronze for example.

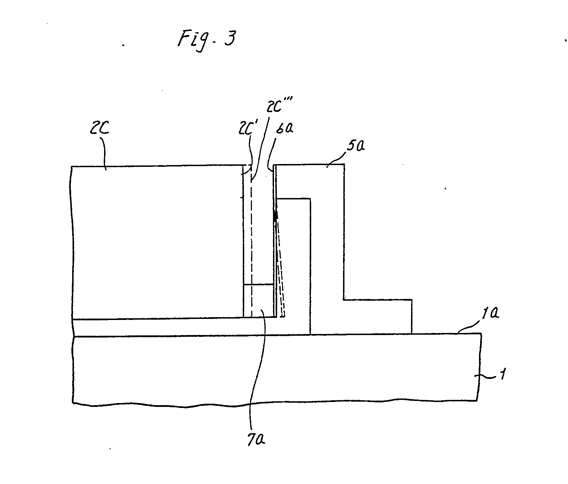

Figure 3 is a side view, to enlarged scale, of a region near the end surface 2C' of the mirror 2C in the optical apparatus of Figure 2C.

As explained above, the end surface 2C' of the mirror 2C is for example bonded to the spacer 7a which is mounted on the flat plate 6a which is in turn mounted on the mounting member 5a. Thus, when the relative position of the end surface 2C' of mirror 2C shifts to the position indicated by a broken line at 2C3''' due to a temperature change the flat plate 6a acts as a plate spring and is bent as indicated by broken lines.

Thereby, stress which would act on the mirror were the end portion of the mirror fixed, by bonding agent for example, to the stage is alleviated or taken up by means of the flat plate 6a with the result that there is no substantial deformation of the mirror. Therefore, the crossing angle formed at the vertex between the two sides of the L-shaped mirror is kept to 90° with an extremely small error.

In an embodiment of the present invention only a part of a mirror is affixed to a supporting portion of a mirror mounting stage, and mounting means, affixed to the mirror mounting stage, is provided at a free end part of the mirror. The mounting means bears against the free end part of the mirror and is so formed as to take up, resiliently, stresses arising for example from differential size changes of the mirror and mirror mounting stage. Such differential size changes can arise, for example, as a result of temperature changes when the mirror and mirror mounting stage have different coefficient of expansion.

The mounting means for example comprises a first portion affixed to the mounting stage and a second portion, pendant from the first portion, bearing at its lower end against the free part of the mirror. The second portion is resiliently deformable, so as to take up changes in position of the free part of the mirror, and the first portion is so structured as to permit deformation of the second portion.

The second portion may be provided with a spacer at its lower end, which spacer bears against, and may be affixed to, the free part of the mirror.

The inventors of the present invention have conducted experiments in order to confirm the beneficial effect of the present invention.

A stage with an L-shaped mirror mounted thereon was accommodated in a thermal chamber and autocollimators respectively provided for each of the two mutually orthogonal mirror surfaces for measuring the locations of those two surfaces. In addition, a temperature sensor was provided on the stage in order to measure the temperature of the stage.

Experiments were carried out for a stage mounting a mirror in accordance with an embodiment of the present invention, and for a stage mounting a mirror in accordance with the prior art, as follows:

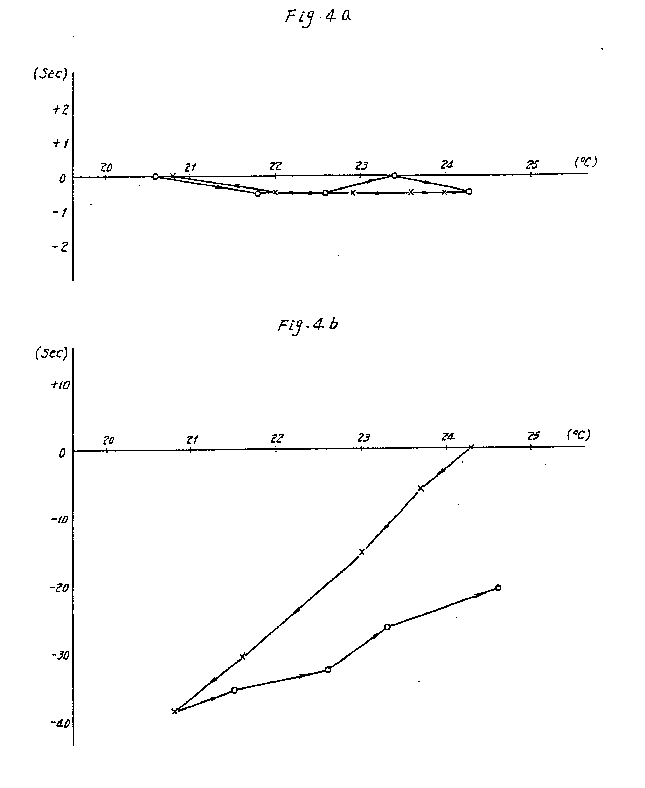

(1) An arrangement as shown in Figure 2C was heated and its temperature raised to 24.3°C from 20.6°C and then reduced back to 20.6°C. In this case, the amount of deviation from an angle of 90° between the (nominally) mutually orthogonal sides of the L-shaped mirror was as indicated in the graph of Figure 4a. In the graph of Figure 4a, the amount of deviation (in seconds) is plotted on the vertical axis, whilst the temperature (°C) is plotted on the horizontal axis. As is clear from Figure 4a, the maximum amount of deviation was −0.5" (seconds).

(2) A prior art arrangement in which the mirror is fixed to the stage at three points (see Figure 1b) was accommodated within the thermal chamber and its temperature reduced to 20.8°C from an initial value of 24.3°C and then its temperature increased again. In this case, the variation of deviation from a 90° crossing angle is as indicated in Figure 4b. The amount of deviation is plotted on the vertical axis (in seconds) in Figure 4b, whilst temperature is plotted on the horizontal axis. As is clear from Figure 4b, maximum devia-

tion for this example of the prior art was −38″ (seconds).

In Figures 4a and 4b small circles refer to experimental results obtained during temperature increase, whilst small crosses refer to experimental results obtained during temperature decrease.

The results of the experiments show that distortion of mirrors in an embodiment of the present invention is extremely small in comparison with distortion in the prior art and deviation from 90° of the angle between the two sides of an L-shaped mirror is also extremely small.

Optical apparatus embodying the present invention can be structured of simple elements such as a mounting member, a flat plate and a spacer etc, and these elements do not need to be manufactured to a high accuracy.

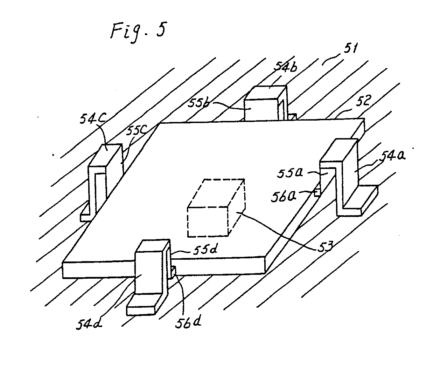

Another embodiment of the present invention is illustrated in Figure 5.

In the apparatus of Figure 5 a flat mirror 52 is mounted on a metal stage 51. If the mirror 52 were fixed on the stage 51 with all of its bottom surface in contact with the stage "bending" of the mirror, which mirror is required to have accurate flatness, would occur during a temperature change, because of difference between the expansion coefficients of the mirror and the stage.

Therefore, in this embodiment of the present invention, as shown in Figure 5, a supporting portion or plate 53 is provided on the stage 51 and the mirror 52 is fixed thereon, for example by bonding. Further, similarly to the embodiment of the present invention illustrated in Figures 2, mounting plates 54a to 54d having flat plates 55a to 55d are employed. The mounting plates are installed at respective positions along the sides of the mirror 52, on the stage 51.

Spacers 56a to 56d are provided which contact the sides of the mirror and are, for example, bonded thereto.

In optical apparatus embodying the present invention, differential size changes due to difference between expansion coefficients of the mirror and the stage mounting the mirror are absorbed by flat plates (55a to 55d in Figure 5, 6a and 6b in Figure 2) which operate as buffering members. As a result, application of stress large enough to deform the mirror is avoided and the flatness of the mirror surface can be maintained.

**Claims**

1. Optical apparatus having a mirror (2C, 52) and a mirror mounting stage (1, 51), comprising: a supporting portion, (1C, 53), provided on the stage, to which a part of the mirror is affixed, the mirror also having a free part (2C′, 2C″), unaffixed to that portion, and buffer means (5a, 6a, 7a; 54a to 54d, 55a to 55d, 56a to 56d), comprising a mounting portion (5a; 54a to 54d) affixed to the mirror mounting stage (1, 51) and a spring portion (6a, 7a; 55a to 55d, 56a to 56d) attached to the mounting portion and contacting the free part (2C′, 2C″) of the mirror, operable to take up relative displacements between the free part of the mirror and the mirror mounting stage.

2. Appartus as claimed in claim 1, wherein the spring portion (6a, 7a; 55a to 55d, 56a to 56d) is pendant from the mounting portion (5a, 54a to 54d) and bears at its lower end against the free part (2C′, 2C″) of the mirror (2C, 52), the spring portion being resiliently deformable to take up changes in the position of the free part of the mirror, and the mounting portion being so structured as to accommodate such deformation of the spring portion.

3. Apparatus as claimed in claim 1 or 2, wherein the spring portion (6a, 7a; 55a to 55d, 56a to 56d) is a plate spring (6a, 55a to 55d) provided with a spacer (7a, 56a to 56d) which contacts the free part (2C′, 2C″) of the mirror (2C, 52).

4. Apparatus as claimed in any preceding claim wherein the buffer means are mechanically connected to the free part (2C′, 2C″) of the mirror (2C, 52).

5. Apparatus as claimed in any preceding claim, wherein the mirror (2C) is L-shaped.

6. Apparatus as claimed in claim 5, wherein the vertex of the L-shaped mirror (2C) is affixed to the supporting portion (1C) provided on the mirror mounting stage (1), with end parts (2C′, 2C″) of the L-shaped mirror free, the apparatus comprising respective buffer means contacting the respective free end parts of the mirror.

7. Apparatus as claimed in any one of claims 1 to 4, wherein the mirror (52) is flat.

8. Apparatus as claimed in claim 7, wherein a central part of the mirror (52) is affixed to the supporting portion (53) provided on the mirror mounting stage (51), with the edges of the mirror free.

9. Electron beam exposure apparatus including optical apparatus as claimed in any preceding claim.

**Patentansprüche**

1. Optische Vorrichtung mit einem Spiegel (2C, 52) und einer Spiegelmontagestufe (1, 51), mit: einem Stützabschnitt (1C, 53), der auf der Stufe befestigt ist, an dem ein Teil des Spiegels befestigt ist, welcher auch einen freien Teil (2C′, 2C″) hat, der nicht an jenem Abschnitt befestigt ist, und

Puffereinrichtungen (5a, 6a, 7a; 54a bis 54d, 55a bis 55d, 56a bis 56d), die einen Montageabschnitt (5a; 54a bis 54d), der and der Spiegelmontagestufe (1, 51) befestigt ist, und einen Federabschnitt (6a, 7a; 55a bis 55d, 56a bis 56d) umfassen, der an dem Montageabschnitt befestigt ist, und mit dem freien Teil (2C′, 2C″) des Spiegels in Kontakt ist, und dazu dienen, relative Versetzungen zwischen dem freien Abschnitt des Spiegels und der Spiegelmontagestufe aufzunehmen.

2. Vorrichtung nach Anspruch·1, bei der der Federabschnitt (6a, 7a; 55a bis 55d, 56a bis 56d) von dem Montageabschnitt (5a, 54a bis 54d) herabhängt und mit seinem unteren Ende gegen den freien Teil (2C', 2C") des Spiegels (2C, 52) drückt, und der Federabschnitt elastisch verformbar ist, um Änderungen der Position des freien Teils des Spiegels aufzunehmen, und der Montageabschnitt so strukturiert ist, daß er solche Deformation des Federabschnittes aufnehmen kann.

3. Vorrichtung nach Anspruch 1 oder 2, bei der der Federabschnitt (6a, 7a; 55a bis 55d, 56a bis 56d) eine Blattfeder (6a, 55a bis 55d) ist, die mit einem Abstandshalter (7a, 56a bis 56d) versehen ist, welcher den freien Teil (2C', 2C") des Spiegels (2C, 52) kontaktiert.

4. Vorrichtung nach einem der vorhergehenden Ansprüche, bei der die Puffereinrichtungen mechanisch mit dem freien Teil (2C', 2C") des Spiegels (2C, 52) verbunden sind.

5. Vorrichtung nach einem der vorhergehenden Ansprüche, bei der der Spiegel (2C) L-förmig ist.

6. Vorrichtung nach Anspruch 5, bei der der Eckpunkt des L-förmigen Spiegels (2C) an dem Stützabschnitt (1C) befestigt ist, der auf der Spiegelmontagestufe (1) vorgesehen ist, wobei die Endteile (2C', 2C") des L-förmigen Spiegels frei sind, und die Vorrichtung jeweilige Puffereinrichtungen umfaßt, die die entsprechenden freien Endteile des Spiegels kontaktieren.

7. Vorrichtung nach einem der Ansprüche 1 bis 4, bei der der Spiegel (52) flach ist.

8. Vorrichtung nach Anspruch 7, bei der ein zentraler Abschnitt des Spiegels (52) an dem Stützabschnitt (53) befestigt ist, der auf der Spiegelmontagestufe (51) vorgesehen ist, wobei die Kanten des Spiegels frei sind.

9. Elektronenstrahlvorrichtung einschließlich einer optischen Vorrichtung nach einem der vorhergehenden Ansprüche.

**Revendications**

1. Dispositif optique possédant un miroir (2C, 52) et une platine porte-miroir (1, 51), comprenant:

une portion de support (1C, 53), prévue sur la platine, à laquelle est fixée une partie du miroir, lequel possède également une partie libre (2C', 2C"), non fixée à cette portion, et

un moyen formant tampon (5a, 6a, 7a; 54a à 54d, 55a à 55d, 56a à 56d), comprenant une partie de montage (5a; 54a à 54d) fixéd à la platine porte-miroir (1, 51) et une partie à ressort (6a, 7a; 55a à 55d, 56a à 56d) attachée à la partie de montage, en contact avec la partie libre (2C', 2C") du miroir et capable d'absorber des . déplacements relatifs entre la partie libre du miroir et la platine porte-miroir.

2. Dispositif selon la revendication 1, dans lequel la partie à ressort (6a, 7a; 55a à 55d, 56a à 56d) est suspendue à la partie de montage (5a, 54a à 54d) et est appliquée par son extrémité inférieure contre la partie libre (2C', 2C") du miroir (2C, 52), la partie à ressort étant élastiquement déformable, afin d'absorber des changements de position de la partie libre du miroir, et la partie de montage étant réalisée pour permettre cette déformation de la partie à ressort.

3. Dispositif selon la revendication 1 ou 2, dans lequel la partie à ressort (6a, 7a; 55a à 55d, 56a à 56d) est une plaque formant ressort (6a, 55a à 55d), qui est pourvue d'une entretoise (7a, 56a à 56d) qui est en contact avec la partie libre (2C', 2C") du miroir (2C, 52).

4. Dispositif selon l'une quelconque des revendications précédentes, dans lequel les moyens formant tampon sont reliés mécaniquement à la partie libre (2C', 2C") du miroir (2C, 52).

5. Dispositif selon l'une quelconque des revendications précédentes, dans lequel le miroir (2C) est en L.

6. Dispositif selon la revendication 5, dans lequel le coude du miroir en L (2C) est fixé à la portion de support (1C), prévue sur la platine porte-miroir (1), les parties extrêmes (2C', 2C") du miroir en L étant libres, le dispositif comprenant des moyens formant tampon en contact avec des parties extrêmes libres correspondantes du miroir.

7. Dispositif selon l'une quelconque des revendications 1 à 4, dans lequel le miroir (52) est plan.

8. Dispositif selon la revendication 7, dans lequel une partie centrale du miroir (52) est fixée à la portion de support (53), prévue sur la platine porte-miroir (51), les bords du miroir étant libres.

9. Appareil pour l'exposition d'objets à un faisceau d'électrons, contenant un dispositif optique selon l'une quelconque des revendications précédentes.

Fig. 1a

Fig. 1b

Fig·2a

*1b*  *1*  *1a*  *1C*

Fig·2b

*1b*  *5b*  *6b*  *1*  *6a*  *5a*  *7b*  *1a*  *1C*  *7a*

Fig·2C

*1b*  *2C"*  *2C*  *1*  *2C'*  *2C*  *1a*

Fig. 3

Fig. 4 a

Fig. 4 b

4

Fig. 5